# EUROPÄISCHE PATENTANMELDUNG

(11) **EP 1 233 629 A2**
(43) Veröffentlichungstag der Anmeldung: **21.08.2002**
(21) Anmeldenummer: 02002476.6
(22) Anmeldetag: 01.02.2002
(51) Int. Cl.: H04Q 3/62, H04Q 3/00

(54) **Hardwareeinheit, Servereinheit und Verfahren zum Betreiben einer Telefonverbindung**

(30) Priorität: 16.02.2001 DE 10107214
(71) Anmelder: Tenovis GmbH & Co. KG, 60326 Frankfurt am Main (DE)
(72) Erfinder: Schlesinger, Jürgen, 64572 Büttelborn (DE)
(74) Vertreter: Patentanwaltskanzlei WILHELM & BECK

(57) **Zusammenfassung**

Es wird eine Hardwareeinheit, ein Verfahren zum Betreiben einer Telefonverbindung und eine Servereinheit beschrieben, bei der die Vermittlung zwischen zwei Telefonen über mindestens eine Hardwareeinrichtung erfolgt. Die Hardwareeinrichtung wird von einem Server mit Software versorgt, der über ein Datennetz an die Hardwareeinrichtung angeschlossen ist. Die Hardwareeinrichtung weist Hardwarekomponenten zum Vermitteln eines Telefonanrufes auf, wobei jedoch die Verfahren zum Steuern der Hardwarekomponenten in einem externen Server ausgelagert sind.

## Beschreibung

Die Erfindung betrifft eine Hardwareeinheit gemäß dem Oberbegriff des Patentanspruchs 1, ein Verfahren zum Betreiben einer Telefonverbindung gemäß dem Oberbegriff des Patentanspruchs 7 und eine Servereinheit gemäß dem Oberbegriff des Patentanspruchs 10.

Es sind Telefonanlagen bekannt, die als vollständige, eigenständige Geräte oder als Einschubkarten ausgebildet sind, die in einem PC betrieben werden. Grundsätzlich besteht daher eine enge Kopplung zwischen der Hardware und der Software, die bei der Telefonanlage zum Einsatz kommen. Die enge Kopplung zwischen Hardware und Software bietet Vorteile in Bezug auf eine präzise und einfache Abstimmung, liefert aber auch Nachteile in Bezug auf die Flexibilität der einzelnen Hardwarekomponenten und/oder Softwarekomponenten.

Die Aufgabe der Erfindung besteht darin, eine Hardwareeinheit, eine Vermittlungseinheit und ein Verfahren zum Betreiben einer Telefonverbindung bereitzustellen, die flexibler aufgebaut sind.

Die Aufgabe der Erfindung wird durch die Merkmale des Anspruchs 1, durch die Merkmale des Anspruchs 7 und durch die Merkmale des Anspruchs 10 gelöst.

Ein Vorteil der Erfindung besteht darin, dass eine einfach aufgebaute Hardwareeinheit vorgesehen ist, die eine Vermittlungsfunktionalität abfragt. Die Hardwareeinheit weist alle Hardwarebauteile einer Vermittlungsanlage auf. Die Hardwareeinheit wird zum Aufbau einer Telefonverbindung von einem Telefon verwendet, wobei über das Abfragen ein Überblick über die mögliche Vermittlungsfunktionalität gegeben ist. Somit besteht die Möglichkeit, abhängig von der gewünschten Vermittlungsfunktionalität oder weiterer Kriterien die entsprechende Vermittlungsfunktionalität auszuwählen. Das vorgeschlagene Konzept bietet den Vorteil, dass die zur Vermittlung eines Telefonanrufes verwendeten Verfahren nicht in der Hardwareeinheit festgelegt sind, sondern beispielsweise verteilt in einem Datennetz vorliegen. Auf diese Weise kann bei Bedarf auf verschiedene Vermittlungsfunktionalitäten zugegriffen werden und die optimale Vermittlungsfunktionalität ausgewählt werden. Weiterhin bietet ein verteiltes Anbieten von Vermittlungsfunktionalitäten in einem Datennetz den Vorteil, dass eine größere Sicherheit gegenüber einem Totalausfall der Vermittlungsfunktionalität gegeben ist. Selbst wenn eine einzelne Vermittlungsfunktionalität ausfällt, kann deren Funktion durch eine andere und/oder gleiche Vermittlungsfunktionalität übernommen werden, die ebenfalls im Datennetz verfügbar ist.

Weiterhin bietet das vorgeschlagene Konzept die Möglichkeit, die Vermittlungsfunktionalität in einem zentralen Server bereitzustellen und einer Vielzahl von Hardwareeinheiten zur Verfügung zu stellen. Diese Ausführungsform bietet den Vorteil, dass eine Veränderung der Vermittlungsfunktionalitäten zentral in einem Verfahren möglich ist und nicht bei allen Hardwareeinheiten ein entsprechendes Verfahren durchgeführt werden muss. Somit ist eine Wartung und/oder Veränderung der angebotenen Vermittlungsfunktionalität auf einfache Weise möglich. Zudem wird durch die einfache Ausführungsform der Hardwareeinheit eine kostengünstige Telefoneinheit bereitgestellt.

Weitere Ausführungsformen der Erfindung sind in den abhängigen Ansprüchen angegeben.

Vorzugsweise gibt die Hardwareeinheit eine Anfrage ab, bei der die Adresse der Hardwareeinheit und eine gewünschte Vermittlungsfunktion enthalten sind. Auf diese Weise wird die Anzahl der angebotenen Vermittlungsfunktionalitäten auf die gewünschte Vermittlungsfunktionalität eingeschränkt. Somit wird eine Vorauswahl festgelegt, wodurch ein schnelleres Verfahren zum Festlegen der zu wählenden Vermittlungsfunktionalität gegeben ist.

Die Hardwareeinheit ist in der Weise ausgebildet, dass die Hardwareeinheit über eine zweite Schnittstelle ein Antwortsignal erhalten kann, wobei das Antwortsignal Daten über eine angebotene Vermittlungsfunktionalität aufweist.

In einer bevorzugten Ausführungsform weist das Antwortsignal einen Parameter auf, der einen Einstellparameter für eine Datenverbindung zwischen einer zweiten Recheneinheit, der eine Vermittlungsfunktionalität anbietet, und der Hardwareeinheit darstellt. Auf diese Weise ist es möglich, die Hardwareeinheit auf ein bevorzugtes Datenübertragungsverfahren einzustellen, so dass die Datenverbindung zwischen der Hardwareeinheit und der zweiten Recheneinheit optimal erfolgen kann.

In einer bevorzugten Ausführungsform wählt die Hardwareeinheit aus Antwortsignalen mehrerer zweiter Recheneinheiten nach einem vorgegebenen Kriterium eine Recheneinheit aus, mit der bei einer Anfrage zum Aufbau einer Telefonverbindung eine Datenverbindung aufgebaut wird. Auf diese Weise kann aus einer Vielzahl von Recheneinheiten, die Vermittlungsfunktionalitäten anbieten, eine passende Recheneinheit ausgewählt werden. Beispielsweise kann als Kriterium die Vermittlungsfunktionalität, die Ausfallsicherheit der zweiten Recheneinheit oder die Auslastung der zweiten Recheneinheit gewählt werden.

Ein Vorteil des erfindungsgemäßen Servers besteht darin, dass der Server eine Vermittlungsfunktionalität bereithält, dass die Vermittlungseinheit die Vermittlungsfunktionalität nach Erhalt eines Anfragesignals in einem Datennetz in Form eines Antwortsignals anbietet. Die Anordnung von mehreren Servern in einem Datennetz bietet den Vorteil, dass Vermittlungsfunktionalitäten zentral oder dezentral unabhängig von der Hardwareeinheit, die zum Übertragen von Daten von einem Telefongerät verwendet wird, vorgesehen sind. Somit ist eine erweiterte Flexibilität gegeben. Weiterhin kann je nach Anforderung von einem Telefongerät über die Hardwareeinheit eine gerade gewünschte Vermittlungsfunktionalität verwendet werden, die im Datennetz zur Verfügung steht. Sowohl in Bezug auf den Umfang der Vermittlungsfunktionalität und/oder dem zeitlichen Bereithalten der Vermittlungsfunktionalität ist eine größere Flexibilität gegeben.

Eine weitere vorteilhafte Ausführungsform besteht darin, dass mehrere Server vorgesehen sind, dass die Server unterschiedliche Vermittlungsfunktionalitäten aufweisen, und dass vorzugsweise eine Kombination der Vermittlungsfunktionalitäten der Server im Datennetz angeboten wird. Auf diese Weise ist es möglich, unabhängig von den Vermittlungsfunktionalitäten der einzelnen Server eine maßgeschneiderte Vermittlungsfunktionalität anzubieten. Somit ist eine erhöhte Flexibilität gegeben. Beispielsweise kann durch eine entsprechende Auswahl der zweiten Recheneinheiten die Auslastung der zweiten Recheneinheiten optimiert werden.

Die Erfindung wird im Folgenden anhand der Figuren näher erläutert. Es zeigen
Fig. 1 ein Datennetz über das Telefonverbindungen hergestellt werden, und
Fig. 2 einen schematischen Ablauf eines Aufbaus einer Telefonverbindung.

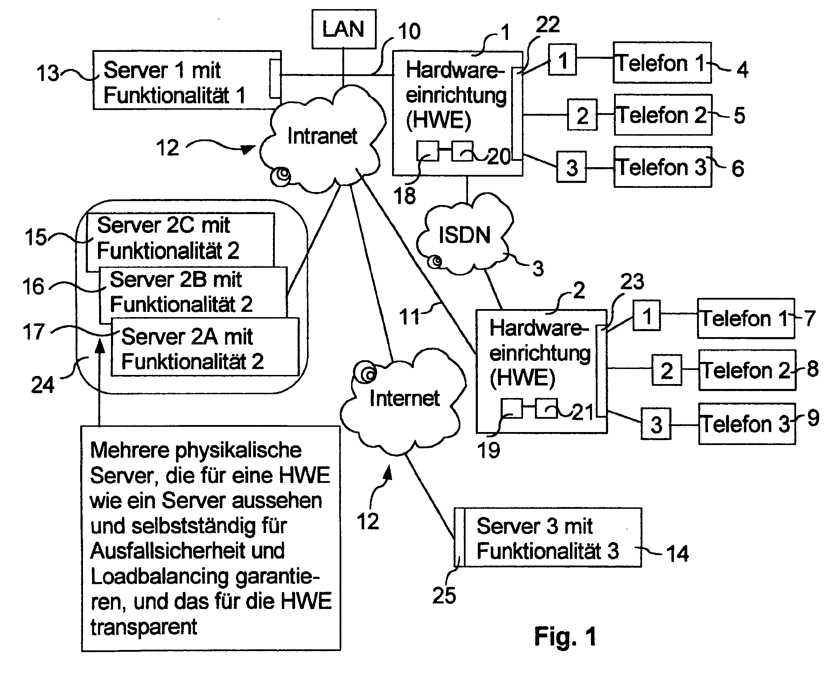

Fig. 1 zeigt eine erste und eine zweite Hardwareeinheit 1, 2, die über eine ISDN-Leitung 3 miteinander verbunden sind. Die erste und die zweite Hardwareeinheit 1, 2 sind jeweils mit mehreren Telefonen 4, 5, 6, 7, 8, 9 verbunden. Weiterhin stehen die erste und die zweite Hardwareeinheit über jeweils eine Schnittstelle 10, 11 mit einem Datennetz 12 in Verbindung. Das Datennetz 12 ist beispielsweise als Local-Area-Network (LAN), als Intranet und/oder als Internet ausgebildet. An das Datennetz 12 ist ein erster Server 13, ein zweiter Server 14 und eine Servereinheit 24 mit einem dritten, vierten und fünften Server 15, 16, 17 angeschlossen. Der dritte, vierte und fünfte Server 15, 16, 17 sind miteinander verbunden und stehen beispielsweise über den vierten Server 16 mit dem Datennetz 12 in Verbindung. Ein Datenaustausch zwischen dem Datennetz 12 und dem dritten, vierten und fünften Server 15, 16, 17 wird somit über den vierten Server 16 durchgeführt. Die Verbindung zwischen dem dritten, vierten und fünften Server 15, 16, 17 kann beispielsweise in Form einer direkten Datenleitung oder in Form eines Local-Area-Networks, eines Intranets oder eines Internets ausgebildet sein.

Die erste und die zweite Hardwareeinheit 1, 2 weisen jeweils eine erste bzw. zweite Recheneinheit 18, 19, einen ersten bzw. zweiten Speicher 20, 21 und eine dritte bzw. vierte Schnittstelle 22, 23 auf, über die die Telefone mit der ersten bzw. mit der zweiten Hardwareeinheit 1, 2 verbunden sind. Die erste und zweite Hardwareeinheit weisen alle Hardwarebauteile einer Vermittlungsanlage auf. Die Vermittlungsfunktion wird jedoch durch Software gesteuert. Die entsprechende Software ist im ersten bzw. zweiten Speicher abgelegt und wird bei Bedarf oder in regelmäßigen Zeitabständen aktualisiert. Dabei wird auf Software zugegriffen, die im Datennetz 12 angeboten wird.

Die Server 13, 14, 15, 16, 17 weisen ebenfalls jeweils eine Recheneinheit mit einem Speicher und einer Schnittstelle auf, über die der entsprechende Server mit dem Datennetz 12 Daten austauscht. Der erste und der zweite Server 13, 14 weisen unterschiedliche Vermittlungsfunktionalitäten auf, mit denen eine Telefonverbindung vermittelt werden kann bzw. unterschiedliche zusätzliche Leistungsmerkmale auf, die bei einer Telefonverbindung ausgeführt werden können. Unter zusätzlichen Leistungsmerkmalen werden alle Funktionen verstanden, die bei einer Vermittlung eines Telefongesprächs neben dem Aufbau und der Aufrechterhaltung der Telefonverbindung angeboten werden. Beispielsweise ist das die Übertragung der Telefonnummer des Anrufenden, die Anzeige der Gebühren, die Unterdrückung eines Anrufes für eine vorgegebene Telefonnummer eines Anrufers usw. Weiterhin sind im Speicher des ersten und zweiten Servers 13, 14 Informationen abgelegt, die eine Aussage über die Ausfallsicherheit, die Auslastung und weitere Parameter ermöglichen, die beim Betreiben einer Telefonverbindung von Bedeutung sind.

Der dritte, vierte und fünfte Server 15, 16, 17 weisen vorzugsweise die gleiche Vermittlungsfunktionalität und die gleiche Funktionalität in Bezug auf die zusätzlichen Leistungsmerkmale auf. In einer weiteren Ausführungsform der Erfindung weisen der dritte, vierte und fünfte Server 15, 16, 17 unterschiedliche Vermittlungsfunktionalitäten und/oder Funktionalitäten in Bezug auf die zusätzlichen Leistungsmerkmale auf, die sich auch überschneiden können.

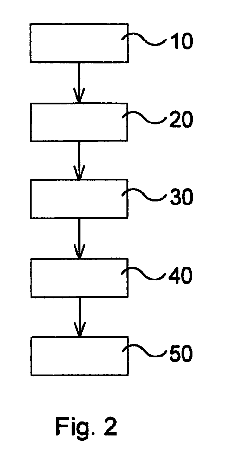

Fig. 2 zeigt anhand eines schematischen Programmablaufes die weitere Funktionsweise der Vermittlungsanordnung, die in Fig. 1 dargestellt ist. Bei Programmpunkt 10 gibt die Hardwareeinrichtung 1 eine Anfrage über die erste Schnittstelle 10 aus, um eine Information über die im Datennetz 12 bereitstehenden Vermittlungsfunktionalitäten zu erhalten. In einer einfachen Ausführungsform kann die Hardwareeinrichtung 1 auch nur über eine Datenleitung mit einem einzigen Server 13 verbunden sein, so dass die Hardwareeinrichtung 1 bei der Anfrage nur die Vermittlungsfunktionalität eines Servers 13 abfragt. In einem größeren Datennetz 12, wie in Fig. 1 dargestellt ist, wird jedoch die Anfrage an eine Vielzahl von Servern weitergeleitet. Das Anfragesignal der Hardwareeinrichtung 1 beinhaltet vorzugsweise neben der Adresse der Hardwareeinrichtung 1 im Datennetz 12 auch vorzugsweise eine Angabe einer gewünschten Vermittlungsfunktionalität und/oder gewünschter zusätzlicher Leistungsmerkmale. Die Anfrage wird beispielsweise in Form eines Datenwortes ausgegeben.

Die Server 13, 14 und 16, die das Anfragesignal erhalten, werten das Anfragesignal bei Programmpunkt 20 aus. In einer einfachen Ausführungsform liegt die Auswertung darin, dass vom jeweiligen Server Daten über die bereitstehende Vermittlungsfunktionalität und/oder bereitstehende Leistungsmerkmale in Form eines Antwortsignals an die Hardwareeinrichtung 1 zurückgesendet werden. Stehen mehrere Server mit der Hardwareeinrichtung 1 in Verbindung, so ist es erforderlich, dass der jeweilige Server in dem Antwortsignal zusätzlich seine jeweilige Adresse im Datennetz 12 mitteilt. Erst durch die Angabe der Adresse ist es für die Hardwareeinrichtung 1 möglich, die angebotene Vermittlungsfunktionalität eindeutig einem Server zuzuordnen und anschließend den Server auszuwählen, der die gewünschte Vermittlungsfunktionalität aufweist.

Die Servereinheit 24 wertet ebenfalls das Anfragesignal aus und ermittelt eine Summe der Vermittlungsfunktionalitäten und der weiteren Leistungsmerkmale, die von dem dritten, vierten und fünften Server 15, 16, 17 angeboten werden können. Die Summe der Vermittlungsfunktionalitäten und der Leistungsmerkmale wird von dem vierten Server 16 mit der Adresse des vierten Servers 16 als Antwortsignal der Servereinheit 24 über das Datennetz 12 an die Hardwareeinrichtung 1 zurückgesendet.

In einer weiteren Ausführungsform weisen die Antwortsignale der Server und der Vermittlungseinheit zusätzliche Parameter auf, die einen optimalen Datenaustausch mit der Hardwareeinrichtung 1 ermöglichen. Als Parameter werden beispielsweise technische Werte wie die zu verwendende Datenübertragungsrate und die zu verwendende Codierung für die Art und Weise der Datenübertragung verwendet.

Bei dem folgenden Programmpunkt 30 wertet die erste Hardwareeinrichtung 1 die erhaltenen Antwortsignale aus. Dabei wird in einer einfachen Ausführungsform des Datennetzes, bei der nur ein Server 13 an das Datennetz 12 angeschlossen ist, überprüft, ob die angebotene Vermittlungsfunktionalität und/oder die angebotenen weiteren Leistungsmerkmale mit der gewünschten Vermittlungsfunktionalität bzw. mit den gewünschten weiteren Leistungsmerkmalen übereinstimmen. Weist das Antwortsignal zusätzlich eine Vorgabe eines Parameters zur Datenübertragung zwischen der ersten Hardwareeinrichtung 1 und dem entsprechenden Server auf, so wird der entsprechende Parameter abgespeichert, um bei einem Aufbau einer Datenverbindung mit dem entsprechenden Server berücksichtigt zu werden. Als Parameter wird beispielsweise eine festgelegte Datenübertragungsrate verwendet.

Sind eine Vielzahl von Antwortsignalen eingegangen, so wählt die erste Hardwareeinrichtung 1 aufgrund der Informationen, die in den Antwortsignalen enthalten sind, eine optimale Vermittlungsfunktionalität und/oder optimale weitere Leistungsmerkmale aus. Die Auswahl wird beispielsweise nach folgenden Kriterien durchgeführt: Vermittlungsfunktionalität, Ausfallsicherheit der Software, Auslastung des Servers. Die Kriterien sind hier nicht abschließend aufgeführt, denn es können alle Kriterien verwendet werden, die bei einem Betreiben einer Telefonverbindung und/oder beim Betreiben einer Datenverbindung von Bedeutung sind.

Anschließend legt die Hardwareeinrichtung 1 aufgrund der vorgegebenen Kriterien eine Vermittlungsfunktionalität bei Programmpunkt 40 fest, mit der eine Telefonverbindung bei Anfrage durch ein Telefon 4, 5, 6 aufgebaut wird. Die Hardwareeinheit 1 lädt die Adresse des Servers 13, 14, 16, 24 der ausgewählten Vermittlungsfunktionalität in den ersten Speicher 20 und verwendet den ausgewählten Server für den Aufbau und das Betreiben einer Telefonverbindung.

In einer weiteren bevorzugten Ausführungsform werden alle Antwortsignale in dem ersten Speicher 20 abgelegt, so dass diese für eine spätere erneute Überprüfung beispielsweise anhand anderer und/oder neuer Kriterien verwendet werden können. Beispielsweise werden die Kriterien von jedem Telefon 4, 5, 6 und/oder bei jedem Anfragesignal zum Aufbau einer Telefonverbindung neu festgelegt. Bei einer Vielzahl von Servern, die Vermittlungsfunktionalitäten im Datennetz 12 anbieten, ist es notwendig, dass die Adressen der Server im Datennetz 12 von der ersten Hardwareeinrichtung 1 zum Aufbau einer Datenverbindung berücksichtigt werden. Im Falle der Servereinheit 24 wird als Adresse die Adresse des vierten Servers 16 mitgeteilt und von der ersten Hardwareeinrichtung 1 als Adresse für den Server, der zum Aufbau und zum Betreiben einer Telefonverbindung verwendet wird. Damit erscheint die Servereinheit 24 für die erste Hardwareeinrichtung 1 als eine einzige Vermittlungsfunktionalität.

Gibt bei Programmpunkt 50 das erste Telefon 4 eine Anfrage zum Aufbau einer Telefonverbindung an die erste Hardwareeinrichtung 1, bei der eine Telefonverbindung zum fünften Telefon 8 gewünscht wird, so baut die Hardwareeinrichtung 1 eine Datenverbindung mit dem festgelegten Server auf. Die Hardwareeinrichtung 1 übermittelt die Anfrage dem ausgewählten Server 13, 14, 16, 24. Der ausgewählte Server 13, 14, 16, 24 bestimmt aufgrund eines in einen Speicher abgelegten Programmes die von der Hardwareeinrichtung zum Aufbau der gewünschten Telefonverbindung durchzuführenden Schaltvorgänge und steuert die Hardwareeinrichtung 1 in der entsprechenden Weise. In dem beschriebenen Beispiel verbindet die Hardwareeinheit 1 das erste Telefon 4 mit dem fünften Telefon 8. Die Datenverbindung zwischen der Hardwareeinrichtung 1 und dem ausgewählten Server wird vorzugsweise nach Abschluss der Steuerung unterbrochen.

Zwischen dem ersten Telefon 4 und dem fünften Telefon 8 wird eine Datenverbindung aufgebaut, wobei die Daten über die erste und zweite Hardwareeinrichtung 2 übertragen werden.

Erhält die Hardwareeinrichtung 1 oder die zweite Hardwareeinrichtung 2 das Signal von dem ersten bzw. dem fünften Telefon 4, 8, die Telefonverbindung abzubauen, dann baut die Hardwareeinrichtung 1 bzw. die zweite Hardwareeinrichtung 2 eine Datenverbindung zum ausgewählten Server aus und übermittelt das Signal zum Beenden der Telefonverbindung an den ausgewählten Server.

Der ausgewählte Server steuert dann die Hardwareeinrichtung 1 oder die zweite Hardwareeinrichtung 2 in der Weise, dass die Telefonverbindung zwischen dem ersten und fünften Telefon 8 unterbrochen wird. Anschließend wird die Datenverbindung zwischen dem ausgewählten Server und der Hardwareeinrichtung 1 bzw. der zweiten Hardwareeinrichtung 2 beendet.

Wurde in einer anderen Ausführungsform beispielsweise die Servereinheit 24 ausgewählt, die die gewünschte Vermittlungsfunktionalität aufweist, dann baut die erste Hardwareeinrichtung 1 eine Datenverbindung zur Servereinheit 24 auf und die Hardwareeinrichtung 1 wird von der Servereinheit 24 entsprechend zum Durchführen der von einem Telefon 4 gewünschten Vermittlungsfunktionalität gesteuert. Dabei wird die Servereinheit 24 über die Netzadresse des vierten Servers 16 angesprochen. Bei dem Aufbau der Datenverbindung werden in einer ersten Ausführungsform, bei der der dritte, vierte und fünfte Server 15, 16, 17 die gleiche Vermittlungsfunktionalität aufweisen, der Server von der Servereinheit 24 ausgewählt, der für die gewünschte Datenverbindung der optimale Server ist. Dabei werden Kriterien berücksichtigt, die sich beispielsweise auf die Ausfallsicherheit oder die Auslastung des Servers beziehen.

In der zweiten Ausführungsform, bei der die Vermittlungsfunktionalitäten des dritten, vierten und fünften Servers unterschiedlich sind, wird vom vierten Server 16 der Server ausgewählt, der am besten zu der gewünschten Vermittlungsfunktionalität passt. In einer weiteren Ausführungsform werden einzelne Funktionen der Vermittlungsfunktionalität der Hardwareeinrichtung 1 von verschiedenen Servern 15, 16, 17 der Servereinheit 24 gesteuert.

In einer bevorzugten Ausführungsform überprüft die erste bzw. zweite Hardwareeinrichtung 1, 2 in vorgegebenen oder zufälligen Zeitabständen, welche Vermittlungsfunktionalitäten im Datennetz 12 angeboten werden. Weiterhin überprüft die erste bzw. zweite Hardwareeinheit 1, 2, ob die bisher ausgewählte Vermittlungsfunktionalität und damit der bisher ausgewählte Server weiterhin verwendet werden soll oder durch eine bessere Vermittlungsfunktionalität, d.h. einen anderen Server ersetzt werden soll. Somit wird eine laufende Optimierung der Vermittlungsfunktionalität gewährleistet.

Das in den Figuren 1 und 2 beschriebene Datennetz bietet den Vorteil, dass eine Hardwareeinrichtung 1, 2 mit wenig Software, d.h. mit geringer Intelligenz, vorgesehen werden kann, die trotzdem zur Vermittlung einer Telefonverbindung über ein Datennetz verwendet werden kann. Vorzugsweise beschränkt sich die Software der Hardwareeinrichtung auf ein Protokoll, das zum Auffinden einer Vermittlungsfunktionalität im Datennetz und zum Aufbau einer Datenverbindung mit der entsprechenden Vermittlungsfunktionalität, d.h. dem entsprechenden Server dient.

Die von Telefonen signalisierten Anfragen wie z.B. das Initialisieren einer Telefonverbindung und/oder der Abruf von zusätzlichen Leistungsmerkmalen werden von der ersten bzw. zweiten Hardwareeinrichtung 1, 2 ausgeführt, aber von Servern gesteuert, die über eine Datenverbindung mit der ersten bzw. der zweiten Hardwareeinrichtung verbunden sind.

Die zweite Hardwareeinheit 2 weist vorzugsweise die gleiche Funktionsweise wie die erste Hardwareeinheit 1 auf.

Die erste und zweite Hardwareeinrichtung 1, 2 weisen alle Hardwarebauteile einer Vermittlungsanlage auf, die im Wesentlichen in einer Anschlussbaugruppe für Telefone, einer Anschlussbaugruppe für den Anschluss an ein Netz einer Telefongesellschaft und ein Koppelfeld bestehen.

In einer weiteren Ausführungsform der Erfindung wird die Hardwareeinrichtung 1, 2 in Echtzeit von der ausgewählten Vermittlungsfunktionalität, d.h. dem ausgewählten Server, gesteuert. Dazu baut die Hardwareeinheit bei jedem Wunsch zum Durchführen einer Vermittlungsfunktion für eine Telefonverbindung eine Datenverbindung zu dem ausgewählten Server auf. Die gewünschte Vermittlungsfunktion wird an den Server übertragen und der Server steuert entsprechend der gewünschten Vermittlungsfunktion die Hardwareeinheit, die beispielsweise eine Telefonverbindung mit einem gewünschten Telefon aufbaut. Die Steuerung erfolgt durch den ausgewählten Server und die Ausführung der Vermittlungsfunktion wird von der Hardwareeinheit 1, 2 ausgeführt.

Eine Vermittlungsfunktionalität weist alle Funktionen auf, die beim Betreiben einer Telefonverbindung verwendet werden. Die wichtigsten Funktionalitäten sind: Gesprächsverbindung aufbauen, Rückfrage halten, Anrufer in eine Warteschlange stellen und mit Wartemusik versorgen, Gespräch beenden usw.

### Bezugszeichenliste

- 1: erste Hardwareeinheit
- 2: zweite Hardwareeinheit
- 3: ISDN-Leitung
- 4: erstes Telefon
- 5: zweites Telefon
- 6: drittes Telefon
- 7: viertes Telefon
- 8: fünftes Telefon
- 9: sechstes Telefon
- 10: erste Schnittstelle
- 11: zweite Schnittstelle
- 12: Datennetz
- 13: erster Server
- 14: zweiter Server
- 15: dritter Server
- 16: vierter Server
- 17: fünfter Server
- 18: erste Recheneinheit
- 19: zweite Recheneinheit
- 20: erster Speicher
- 21: zweiter Speicher
- 22: dritte Schnittstelle
- 23: vierte Schnittstelle
- 24: Servereinheit

## Patentansprüche

1. Hardwareeinheit (1, 2) mit einer ersten und mit einer zweiten Schnittstelle (12, 22; 11, 23), wobei über die zweite Schnittstelle (22, 23) zum Betreiben einer Verbindung zu einem Telefongerät (4, 5, 6, 7, 8, 9) und die erste Schnittstelle (10, 11) zum Betreiben einer Verbindung zu einem Server (13, 14, 15, 16, 17) dient,
wobei die Hardwareeinheit (1, 2) eine Recheneinheit (18, 19) und einen Speicher (20, 21) aufweist,
**dadurch gekennzeichnet,**
**dass** die Recheneinheit (18, 19) ausgebildet ist, um über die erste Schnittstelle (10, 11) eine Anfrage abzugeben, mit der eine Vermittlungsfunktionalität zum Vermitteln einer Telefonverbindung oder weiterer Leistungsmerkmale einer Telefonverbindung abgefragt wird.

2. Hardwareeinheit nach Anspruch 1, **dadurch gekennzeichnet, dass** die Anfrage eine Adresse der Hardwareeinheit (1, 2) und eine vorgegebene Vermittlungsfunktionalität oder vorgegebene Leistungsmerkmale aufweist.

3. Hardwareeinheit nach einem der Ansprüche 1 oder 2, **dadurch gekennzeichnet, dass** die Hardwareeinheit (1, 2) geeignet ist, um über die erste Schnittstelle (10, 11) ein Antwortsignal zu erhalten, und
dass das Antwortsignal eine Vermittlungsfunktionalität oder ein Leistungsmerkmal aufweist.

4. Hardwareeinheit nach Anspruch 3, **dadurch gekennzeichnet, dass** das Antwortsignal einen Parameter aufweist, der einen Einstellparameter für eine Datenverbindung zwischen einem Server (13, 14, 15, 16, 17) und der Hardwareeinheit (1, 2) darstellt, und
dass die Hardwareeinheit (1, 2) bei dem Aufbau einer Datenverbindung mit dem Server den Parameter berücksichtigt.

5. Hardwareeinheit nach einem der Ansprüche 1 bis 4, **dadurch gekennzeichnet, dass** die Hardwareeinheit (1, 2) ausgebildet ist, um aus Antwortsignalen mehrerer Server (13, 14, 15, 16, 17) nach einem vorgegebenen Kriterium einen Server (13) auszuwählen, der eine Vermittlungsfunktion oder ein Leistungsmerkmal der Hardwareeinheit (1, 2) steuert.

6. Hardwareeinheit nach einem der Ansprüche 1 bis 4, **dadurch gekennzeichnet, dass** die Hardwareeinheit (1, 2) geeignet ist, um über die zweite Schnittstelle (22, 23) ein Anfragesignal zum Durchführen einer Vermittlungsfunktion für eine Telefonverbindung zu erhalten,
dass die Hardwareeinheit (1, 2) nach Erhalt des Anfragesignals eine Datenverbindung zu einem ausgewählten Server über die erste Schnittstelle (10, 11) aufbaut,
dass die Hardwareeinheit (1, 2) das Anfragesignal an den ausgewählten Server (13) sendet,
dass der ausgewählte Server (13) die Hardwareeinheit (1, 2) zum Durchführen der Vermittlungsfunktion oder des Leistungsmerkmals steuert, und
dass die Hardwareeinheit (1, 2) die Vermittlungsfunktion oder das Leistungsmerkmal ausführt.

7. Verfahren zum Betreiben einer Telefonverbindung, wobei von einer Hardwareeinheit (1, 2) mögliche Funktionalitäten zum Vermitteln oder Betreiben einer Telefonverbindung über eine Datenleitung (12) abgefragt werden,
wobei von der Hardwareeinheit (1, 2) aus einer oder aus mehreren angebotenen Vermittlungsfunktionalitäten oder Leistungsmerkmalen eine Vermittlungsfunktionalität oder ein Leistungsmerkmal bestimmt wird, mit der bzw. mit dem bei einer Anfrage zum Betreiben einer Telefonverbindung die Telefonverbindung betrieben wird.

8. Verfahren nach Anspruch 7, **dadurch gekennzeichnet, dass** von der Hardwareeinheit (1, 2) Antwortsignale empfangen werden, die Parameter von Vermittlungsfunktionalitäten oder Leistungsmerkmalen und Adressen von Servern aufweisen, die die Vermittlungsfunktionalität oder das Leistungsmerkmal anbieten, und
dass die Hardwareeinheit einen Server (13, 14, 15, 16, 17) auswählt.

9. Verfahren nach Anspruch 8,
**dadurch gekennzeichnet,**
**dass** von der Hardwareeinheit (1, 2) ein Antwortsignal erhalten wird,
**dass** das Antwortsignal eine Vermittlungsfunktionalität oder ein Leistungsmerkmal und mindestens einen Parameter zum Betreiben einer Datenverbindung enthalten,
**dass** von der Hardwareeinheit (1, 2) beim Aufbau einer Datenverbindung mit dem Server (13) der Parameter eingestellt wird.

10. Servereinheit (13, 14, 24) mit einer Recheneinheit, einem Speicher und einer Schnittstelle, **dadurch gekennzeichnet, dass** über die Schnittstelle ein Anfragesignal über eine Funktionalität oder ein Leistungsmerkmal zum Betreiben einer Telefonverbindung zuführbar ist,
dass die Recheneinheit nach Erhalt eines Anfragesignals ein Antwortsignal über die Schnittstelle abgibt,
dass das Antwortsignal eine Angabe über die Vermittlungsfunktionalität oder das Leistungsmerkmal aufweist, das die Servereinheit (13, 14, 16, 24) steuern kann.

11. Servereinheit nach Anspruch 10, **dadurch gekennzeichnet, dass** der Server (16) mit mehreren Servern (15, 17) verbunden ist,
dass die Server (15, 16, 17) unterschiedliche Vermittlungsfunktionalitäten oder Leistungsmerkmale aufweisen,
dass der Server (16) in dem Antwortsignal eine Vermittlungsfunktionalität oder ein Leistungsmerkmal anbietet, die bzw. das sich aus mindestens Teilen der Vermittlungsfunktionalitäten bzw. Leistungsmerkmalen mehrerer Server (15, 16, 17) zusammensetzt.

12. Servereinheit nach einem der Ansprüche 11 oder 12, **dadurch gekennzeichnet, dass** die Servereinheit nach einer Anfrage eine Datenverbindung mit einer Hardwareeinheit (1, 2) aufbaut und die Hardwareeinheit zum Betreiben, insbesondere zum Aufbauen einer Telefonverbindung steuert.

13. Datennetzwerk mit einer Hardwareeinheit gemäß dem Anspruch 1 und einem Server gemäß dem Anspruch 10.
